# EUROPEAN PATENT APPLICATION

(11) **EP 3 502 863 A1**
(43) Date of publication of application: **26.06.2019**
(21) Application number: 17208467.5
(22) Date of filing: 19.12.2017
(51) Int. Cl.: G06F 3/16, H04S 7/00

(54) **AN APPARATUS AND ASSOCIATED METHODS FOR PRESENTATION OF FIRST AND SECOND AUGMENTED, VIRTUAL OR MIXED REALITY CONTENT**

(71) Applicant: Nokia Technologies Oy, 02610 Espoo (FI)
(72) Inventor: LAAKSONEN, Lasse, 33210 Tampere (FI); VILERMO, Miikka, 37200 Siuro (FI); LEHTINIEMI, Arto, 33880 Lempäälä (FI); MATE, Sujeet Shyamsundar, 33720 Tampere (FI)
(74) Representative: Nokia EPO representatives

(57) **Abstract**

An apparatus configured to;
based on:
i) the provision of a first virtual space to a user, the first virtual space defined relative to the user or a vehicle; and
ii) personal-virtual-space-boundary information that defines a first boundary of a first area around the user; and
iii) second virtual space content for provision of a second virtual space comprising at least one second audio object having a default second-audio-object location; and
iv) an indication that the default second-audio-object location is within the first area;

provide for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.

## Description

### Technical Field

The present disclosure relates to the field of presentation of virtual, augmented and mixed reality. In particular, it is related to the provision of first and second virtual space content for presentation, associated apparatus, methods and computer programs.

### Background

The presentation of virtual or augmented reality content is becoming common, with content creators providing more and more content for exploration. The presentation of the content may be dependent on the user entering a virtual boundary assigned to a physical area or volume, such as a public square, a shop or a neighborhood, which may be detected and used as a trigger for playback of the content. This may lead to different virtual spaces generated from the content being presented at the same time.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

According to a first aspect we provide an apparatus, the apparatus comprising means configured to;
based on:
   i) the provision of a first virtual space for presentation to a user, the first virtual space defined relative to one of the user and a vehicle in which the user is located, the first virtual space comprising one or more first audio objects having a respective location in the first virtual space, the one or more first audio objects having respective audio content associated therewith wherein the audio content associated with the audio object is provided for presentation as spatial audio such that it will be perceived by the user to originate from the respective location of said audio object; and
   ii) personal-virtual-space-boundary information that defines at least a first boundary of a first area around a current location of the user; and
   iii) second virtual space content comprising information for the provision of a second virtual space for presentation to the user, the second virtual space comprising at least one second audio object having a location in the second virtual space comprising, by default, a default second-audio-object location in the second virtual space, the at least one second audio object having audio content associated therewith wherein the audio content associated with the second audio object is provided for presentation as spatial audio such that it will be perceived to originate from the respective location of said second audio object; and
   iv) an indication that the default second-audio-object location is within the first area defined by the personal-virtual-space-boundary information;
provide for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.

In one or more examples, the presentation of the second virtual space to the user is dependent on a real-world, current location of the user being within a presentation boundary associated with the second virtual space content.

In one or more examples, the one or more first audio objects are located within the first boundary.

In one or more examples, the shifted location is located at one of:
a) the first boundary defined by the personal-virtual-space-boundary information;
b) within a predetermined distance of the first boundary defined by the personal-virtual-space-boundary information.

In one or more examples, the shifted location is further defined as being non-overlapping and angularly spaced from the locations of the one or more first audio objects, from a point of view of the user, based on information indicative of the relative locations from which the user will perceive the audio content of the first audio objects provided for presentation to them.

In one or more examples, the shifted location is further defined as comprising a location that is currently closest, within a threshold distance, to the default second-audio-object location based on a determined position of the user and the default second-audio-object location.

In one or more examples, the second virtual space content defines at least one second-type second audio object having a location in the second audio space comprising, by default, a default second-type-second-audio-object location, the at least one second-type second audio object having audio content associated therewith wherein the audio content associated with the second-type second audio object is provided for presentation as spatial audio such that it is perceived to originate from the location of the said second-type second audio object, wherein based on an indication that the default second-type-second-audio-object location is within the first area defined by the personal-virtual-space-boundary information, provide for presentation of the audio content of the second-type second audio object as spatial audio from a location within the first area defined by the personal-virtual-space-boundary information.

In one or more examples, based on a determination that:
(i) at least one of said one or more locations from which the audio content of the first audio objects is presented as spatial audio, relative to the user; and
(ii) the default second-type-second-audio-object location, relative to the user;
are overlapping from a point of view of the user within a predetermined angular threshold;
provide for moving of the location of the second-type second audio object to a non-overlapping location determined independently of the first boundary defined by the personal-virtual-space-boundary information.

In one or more examples, the location of and the orientation of the first virtual space is defined relative to one of a head or body of the user, such that presentation of the audio content as spatial audio from the locations of the one or more first audio objects is independent of user-movement of said one of the head or body of the user.

In one or more examples, based on an indication that the default second-audio-object location is no longer within the first area defined by the personal-virtual-space-boundary information;
provide for movement of the at least one second audio object in the second virtual space from its shifted location back to its default second-audio-object location such that the audio content associated with the second audio object is presented as spatial audio to be perceived to originate from the default second-audio-object location.

In one or more examples:
(i) the personal-virtual-space-boundary information also defines a second boundary of a second area around the current location of the user, the second boundary, at least in part, inward of the first boundary relative to the user and wherein the first boundary and the second boundary define a buffer-area therebetween;
(ii) the second virtual space content defines at least one third-type second audio object having a location in the second audio space comprising, by default, a default third-type-second-audio-object location in the second virtual space, the at least one third-type second audio object having audio content associated therewith wherein the audio content associated with the third-type second audio object is provided for presentation as spatial audio such that it is perceived to originate from its location; wherein
   based on an indication that a current location of the third-type-second-audio-object is within the buffer-area and that there is relative movement between the third-type-second-audio-object and the user, the apparatus has means configured to provide for one or more changes to one of a trajectory and a velocity of the third-type second audio object such that the location of the at least one third-type second audio object is directed away from its default third-type-second-audio-object location and directed outward of the buffer-area prior to crossing the second boundary.

In one or more examples, the at least one third-type second audio object comprises a third-type second audio object having a moving location that follows a predetermined path in the second audio space, and wherein the audio content associated with the third-type second audio object is provided for presentation as spatial audio such that it is perceived to originate from its current location along the predetermined path, the default third-type-second-audio-object location comprising the location along the predetermined path at the current time.

In one or more examples:
(i) the personal-virtual-space-boundary information also defines a second boundary of a second area around the current location of the user, the second boundary, at least in part, inward of the first boundary relative to the user and wherein the first boundary and the second boundary define a buffer-area therebetween;
(ii) the second virtual space content defines at least one third-type second audio object having a location in the second audio space, the at least one third-type second audio object having audio content associated therewith wherein the audio content associated with the third-type second audio object is provided for presentation as spatial audio such that it is perceived to originate from its location; wherein
based on an indication that the current location of the third-type second audio object is within the buffer-area and that there is relative movement between the user and the current location of the third-type second audio object;
provide for slowing of the relative movement between the between the user and the current location of the third-type second audio object by providing for modification of the movement of the location of the third-type second audio object.

In one or more examples, the apparatus is configured to provide for said slowing of the relative movement based on the speed of the relative movement being above a slowing-threshold speed.

In one or more examples, the apparatus is configured to provide for said slowing of the relative movement as a function of one or more of:
i) the speed of the relative movement between the user and the current location of the third-type second audio object; and
ii) a duration of the audio content associated with the third-type second audio object.

In a further aspect there is provided a method, the method comprising:
based on:
   i) the provision of a first virtual space for presentation to a user, the first virtual space defined relative to one of the user and a vehicle in which the user is located, the first virtual space comprising at least one or more first audio objects having a respective location in the first virtual space, the one or more first audio objects having respective audio content associated therewith wherein the audio content associated with the audio object is provided for presentation as spatial audio such that it will be perceived by the user to originate from the respective location of said audio object; and
   ii) personal-virtual-space-boundary information that defines at least a first boundary of a first area around a current location of the user within which the one or more first audio objects are located; and
   iii) second virtual space content comprising information for the provision of a second virtual space for presentation to the user, the second virtual space comprising at least one second audio object having a location in the second virtual space comprising, by default, a default second-audio-object location in the second virtual space, the at least one second audio object having audio content associated therewith wherein the audio content associated with the second audio object is provided for presentation as spatial audio such that it will be perceived to originate from the respective location of said second audio object; and
   iv) an indication that the default second-audio-object location is within the first area defined by the personal-virtual-space-boundary information;
providing for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.

In one or more examples, the shifted location is further defined as being non-overlapping and angularly spaced from the locations of the one or more first audio objects, from a point of view of the user, based on information indicative of the relative locations from which the user will perceive the audio content of the first audio objects provided for presentation to them.

In a further aspect there is provided a computer readable medium comprising computer program code stored thereon, the computer readable medium and computer program code being configured to, when run on at least one processor, perform the method of:
based on:
   i) the provision of a first virtual space for presentation to a user, the first virtual space defined relative to one of the user and a vehicle in which the user is located, the first virtual space comprising at least one or more first audio objects having a respective location in the first virtual space, the one or more first audio objects having respective audio content associated therewith wherein the audio content associated with the audio object is provided for presentation as spatial audio such that it will be perceived by the user to originate from the respective location of said audio object; and
   ii) personal-virtual-space-boundary information that defines at least a first boundary of a first area around a current location of the user within which the one or more first audio objects are located; and
   iii) second virtual space content comprising information for the provision of a second virtual space for presentation to the user, the second virtual space comprising at least one second audio object having a location in the second virtual space comprising, by default, a default second-audio-object location in the second virtual space, the at least one second audio object having audio content associated therewith wherein the audio content associated with the second audio object is provided for presentation as spatial audio such that it will be perceived to originate from the respective location of said second audio object; and
   iv) an indication that the default second-audio-object location is within the first area defined by the personal-virtual-space-boundary information;
providing for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.

In a further example aspect there is provided an apparatus comprising:
at least one processor; and
at least one memory including computer program code,
the at least one memory and the computer program code configured to, with the at least one processor, cause the apparatus to perform at least the following:
   based on:
      i) the provision of a first virtual space for presentation to a user, the first virtual space defined relative to one of the user and a vehicle in which the user is located, the first virtual space comprising one or more first audio objects having a respective location in the first virtual space, the one or more first audio objects having respective audio content associated therewith wherein the audio content associated with the audio object is provided for presentation as spatial audio such that it will be perceived by the user to originate from the respective location of said audio object; and
      ii) personal-virtual-space-boundary information that defines at least a first boundary of a first area around a current location of the user; and
      iii) second virtual space content comprising information for the provision of a second virtual space for presentation to the user, the second virtual space comprising at least one second audio object having a location in the second virtual space comprising, by default, a default second-audio-object location in the second virtual space, the at least one second audio object having audio content associated therewith wherein the audio content associated with the second audio object is provided for presentation as spatial audio such that it will be perceived to originate from the respective location of said second audio object; and
      iv) an indication that the default second-audio-object location is within the first area defined by the personal-virtual-space-boundary information;
   provide for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.

The present disclosure includes one or more corresponding aspects, examples or features in isolation or in various combinations whether or not specifically stated (including claimed) in that combination or in isolation. Corresponding means and corresponding functional units (e.g., function enabler, AR/VR graphic renderer, display device) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example apparatus for providing for moving of audio objects;
figure 2A illustrates an example of a first virtual space and a second virtual space which, at particular times, spatially overlap as the first virtual space moves through the second virtual space;
figure 2B illustrates an example of first through fourth virtual spaces which may spatially overlap;
figure 2C illustrates a further example of a first virtual space and a second virtual space which, at particular times, spatially overlap as the first virtual space moves past the second virtual space;
figure 3A illustrates an example first virtual space having three spatial audio objects therein and a first boundary defining a first area therearound;
figure 3B illustrates the same first virtual space having three spatial audio objects therein, the first boundary and a second boundary;
figures 4 and 5 show a first virtual space moving relative to a second virtual space and illustrates the movement of spatial audio objects therein from default locations in figure 4 to shifted locations in figure 5;
figure 6 illustrates an example second audio object and an example third-type second audio object and their differing interaction with the first boundary and the second boundary;
figure 7 illustrates an example second-type second audio object and its interaction with the first boundary and the second boundary;
figure 8 shows a flowchart illustrating an example method; and
figure 9 shows a computer readable medium.

### Description of Example Aspects

Virtual reality (VR) may use a VR display comprising a headset, such as glasses or goggles or virtual retinal display, or one or more display screens that surround a user to provide the user with an immersive virtual experience. A virtual reality apparatus, which may or may not include the VR display, may provide for presentation of multimedia VR content representative of a virtual reality scene to a user to simulate the user being present within the virtual reality scene. Accordingly, in one or more examples, the VR apparatus may provide signalling to a VR display for display of the VR content to a user while in one or more other examples, the VR apparatus may be part of the VR display, e.g. part of the headset. The virtual reality scene may therefore comprise the imagery and audio, for example, of the VR content displayed within a three-dimensional virtual reality space so that the user feels immersed in the scene, as if they were there, and may look around the VR space at the VR content displayed around them. The virtual reality scene may replicate a real-world scene to simulate the user being physically present at a real-world location or the virtual reality scene may be computer generated or a combination of computer generated and real-world multimedia content. Thus, the VR content may be considered to comprise the imagery (e.g. static or video imagery), audio and/or accompanying data from which a virtual reality scene may be generated for display. The VR apparatus may therefore provide the VR scene by generating the virtual, three-dimensional, VR space in which to display the VR content. The virtual reality scene may be provided by a panoramic video (such as a panoramic live broadcast), comprising a video having a wide or 360° field of view (or more, such as above and/or below a horizontally oriented field of view). A panoramic video may have a wide field of view in that it has a spatial extent greater than a field of view of a user or greater than a field of view with which the panoramic video is intended to be displayed. The apparatus described herein may comprise a VR apparatus.

The VR content provided to the user may comprise live or recorded images of the real world, captured by a VR content capture device, for example. An example VR content capture device comprises a Nokia Technologies OZO device. As the VR scene is typically larger than a portion a user can view with the VR display, the VR apparatus may provide, for display on the VR display, a virtual reality view of the VR scene to a user, the VR view showing only a spatial portion of the VR content that is viewable at any one time. The VR apparatus may provide for panning around of the VR view in the VR scene based on movement of a user's head and/or eyes. A VR content capture device may be configured to capture VR content for display to one or more users. A VR content capture device may comprise one or more cameras and, optionally, one or more (e.g. directional) microphones configured to capture the surrounding visual and aural scene from a capture point of view. In some examples, the VR content capture device comprises multiple, physically separate cameras and/or microphones. Thus, a musical performance may be captured (and recorded) using a VR content capture device, which may be placed on stage, with the performers moving around it or from the point of view of an audience member. In each case a consumer of the VR content may be able to look around using the VR display of the VR apparatus to experience the performance at the capture location as if they were present.

Augmented reality (AR) may use an AR display, such as glasses or goggles or a virtual retinal display, to augment a view of the real world (such as seen through the glasses or goggles) with computer generated content. An augmented reality apparatus, which may or may not include an AR display, may provide for presentation of multimedia AR content configured to be overlaid over the user's view of the real-world. Thus, a user of augmented reality may be able to view the real-world environment around them, which is augmented or supplemented with content provided by the augmented reality apparatus, which may be overlaid on their view of the real world and/or aurally overlaid over an aural real world scene they can hear. The content may comprise multimedia content such as pictures, photographs, video, diagrams, textual information, aural content among others. Thus, while augmented reality may provide for direct viewing of the real world with the addition of computer generated graphics and/or audio content, a user of virtual reality may only be able to see content presented on the VR display of the virtual reality apparatus substantially without direct viewing of the real world. The apparatus described herein may comprise an AR apparatus.

The virtual reality content may comprise, and a VR apparatus presenting said VR content may provide, predefined-viewing-location VR or free-viewing-location VR. In predefined-viewing-location VR, the location of the user in the virtual reality space may be fixed or follow a predefined path. Accordingly, a user may be free to change their viewing direction with respect to the virtual reality imagery provided for display around them in the virtual reality space, but they may not be free to arbitrarily change their viewing location in the VR space to explore the VR space. Thus, the user may experience such VR content from a fixed point of view or viewing location (or a limited number of locations based on where the VR content capture devices were located in the scene). In some examples of predefined-viewing-location VR the imagery may be considered to move past them. In predefined-viewing-location VR content captured of the real world, the user may be provided with the point of view of the VR content capture device. Predefined-viewing-location VR content may provide the user with three degrees of freedom in the VR space comprising rotation of the viewing direction around any one of x, y and z axes and may therefore be known as three degrees of freedom VR (3DoF VR).

In free-viewing-location VR, the VR content and VR apparatus presenting said VR content may enable a user to be free to explore the virtual reality space. Thus, the VR apparatus may allow for the user to be provided with a free point of view or viewing location in the virtual reality space along with a free viewing direction. Free-viewing-location VR is also known as six degrees of freedom (6DoF) VR or volumetric VR to those skilled in the art. Thus, in 6DoF VR the user may be free to look in different directions around the VR space by modification of their viewing direction and also free to change their viewing location (their virtual location) in the VR space by translation along any one of orthogonal x, y and z axes. The movement available in a 6DoF virtual reality space may be divided into two categories: rotational and translational movement (with three degrees of freedom each). Rotational movement enables a user to turn their head to change their viewing direction. The three rotational movements are around x-axis (roll), around y-axis (pitch), and around z-axis (yaw). Translational movement means that the user may also change their point of view in the space to view the VR space from a different virtual location, i.e., move along the x, y, and z axes according to their wishes. The translational movements may be referred to as surge (x), sway (y), and heave (z) using the terms derived from ship motions.

Similarly, augmented reality may be provided in the same types: predefined-viewing-location AR orfree-viewing-location AR. Mixed reality comprises a type of augmented and virtual reality in which a three-dimensional model of the real-world environment is used to enable virtual objects, including visual and audio objects, to appear to interact with real-world objects in terms of one or more of their movement, presentation (such as audible presentation) to a user and appearance. Mixed reality may be considered as a subset of virtual reality and a subset of augmented reality.

One or more examples described herein relate to free-viewing-location or 6DoF virtual, mixed or augmented reality content in which the user is at least substantially free to move in the virtual space in which imagery and audio is presented by user-input through physically moving or, for example, via a dedicated user interface (Ul).

Spatial audio comprises audio presented to a user in such a way that it is perceived to originate from a particular location, as if the source of the audio was located at that particular location. Thus, virtual reality content may be provided with spatial audio having directional properties, such that the audio is perceived to originate from a point in the VR virtual space, which may be linked to the imagery of the VR content. Augmented or mixed reality content may be provided with spatial audio, such that the spatial audio is perceived as originating from locations in an AR virtual space that are aligned with real world objects visible to the user and/or from augmented reality graphics overlaid over the user's view and/or from any direction or location.

Spatial audio may be presented independently of visual virtual reality or visual augmented reality content. Nevertheless, spatial audio, in some examples, may be considered to be augmented reality content because it augments the aural scene perceived by a user. As an example of independent presentation of spatial audio, a user may wear headphones and, as they explore the real world, they may be presented with spatial audio such that the audio appears to originate at particular locations associated with real world objects or locations. For example, a city tour could be provided by a device that tracks the location of the user in the city and presents audio describing points of interest as spatial audio such that the audio is perceived to originate from the point of interest around the user's location. One or more of the embodiments described herein may present spatial audio.

The spatial positioning of the spatial audio may be provided by 3D audio effects, such as those that utilise a head related transfer function to create a spatial audio space in which audio can be positioned for presentation to a user. Spatial audio may be presented by headphones by using head-related-transfer-function (HRTF) filtering techniques or, for loudspeakers, by using vector-base-amplitude panning (VBAP) techniques to position the perceived aural origin of the audio content. In other embodiments ambisonic audio presentation may be used to present spatial audio. Spatial audio may use one or more of volume differences, timing differences and pitch differences between audible presentation to each of a user's ears to create the perception that the origin of the audio is at a particular location in space. The perceived distance to audio may be rendered by controlling the amount of reverberation and gain to indicate closeness or distance from the perceived source of the spatial audio.

The consumption of virtual, mixed or augmented reality content (collectively referred to as virtual space content herein for brevity) may require the use of a physical real-world space in which the user can move. The movement of the user, as mentioned above, may be used as user-input to control a user-location in a virtual space generated based on the virtual-or-augmented reality content.

In one or more examples, the presentation or non-presentation of virtual space content may be based on a determined location of a user. Accordingly, the presentation of the content may be dependent on the user being within a presentation boundary, which may be defined in the virtual space content or may be associated with the content. The presentation boundary may define a real-world area or volume. The presentation boundary may, in one or more examples, be considered as the boundary of the virtual space generatable from the virtual space content. An apparatus may provide for presentation of the virtual space content when the user enters, or has a location within, the presentation boundary. Said virtual space content may define one or more spatial audio objects each having a location in the virtual space, and therefore, by virtue of the association between virtual space and the real-world area, volume or location, a real-world location. As described above, the audio object may be associated with audio content that is for presentation such that it is perceived to originate from the defined location of the spatial audio object.

In one or more examples at least first and second virtual space content may be available for presentation to a user. The first and second virtual space content may be associated with non-overlapping presentation boundaries and therefore the content may be presented to a user sequentially as the user moves between the areas/volumes defined by the presentation boundaries. However, in one or more examples, the first and second virtual spaces may be associated with overlapping presentation boundaries, at least at discrete times, and therefore the first and second virtual space content may need to be presented simultaneously.

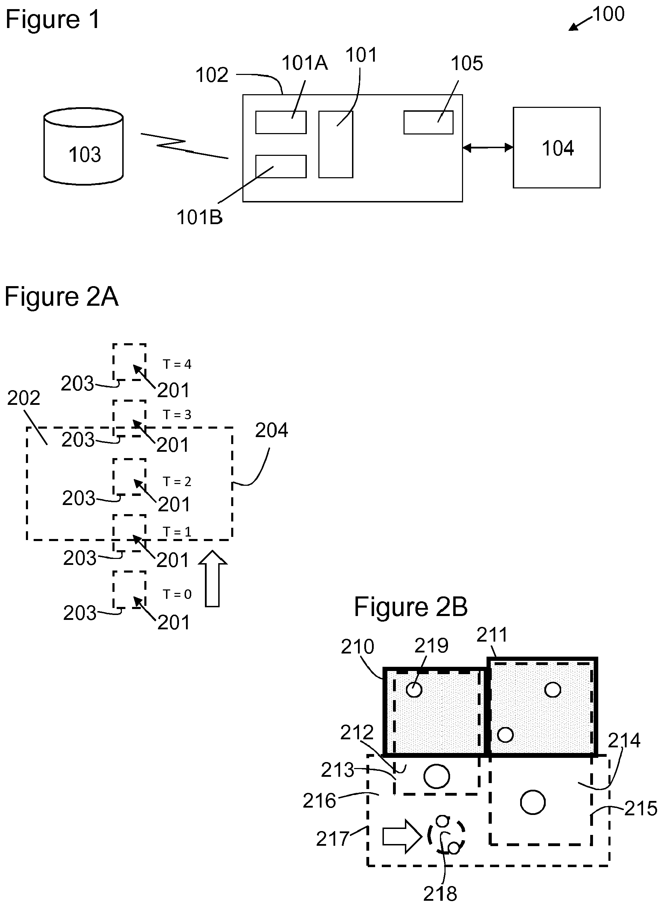

The first and/or second virtual space of the virtual space content may be defined as stationary and may therefore have a spatially fixed, stationary presentation boundary. In one or more examples, the first and/or second virtual space of the virtual space content may be defined as mobile. In one or more examples, the first virtual space content may be associated with the location of the user or associated with a vehicle within which the user is moving. Accordingly, as the user moves, the virtual space, generated from the virtual space content, may move past or through the other, second, static or moving, virtual space. In instances where virtual spaces overlap, the locations from which the presentation of spatial audio or visual imagery occurs have the potential to overlap. The simultaneous presentation of a plurality of spatial audio from the same perceived direction and/or location may result in the audio becoming unclear. The simultaneous presentation of a plurality of instances of visual imagery from the same location may result in the unclear rendering of the visual imagery. Example figures 2A to 2C provide examples of when virtual spaces may overlap, and will be described in more detail below.

However, firstly, example figure 1 shows an example system 100 for presentation of first and second virtual space content to a user. The system 100 includes an example apparatus 101 configured to provide for moving of the location of at least one or more audio objects when the presentation of both first and second virtual space content is required.

The apparatus 101 may comprise or be connected to a processor 101A and a memory 101B and may be configured to execute computer program code. The apparatus 101 may have only one processor 101A and one memory 101B but it will be appreciated that other embodiments may utilise more than one processor and/or more than one memory (e.g. same or different processor/memory types). Further, the apparatus 101 may be an Application Specific Integrated Circuit (ASIC).

The processor may be a general purpose processor dedicated to executing/processing information received from other components, such as from a location tracker 105 and a content store 103, in accordance with instructions stored in the form of computer program code in the memory. The content store may be local to the apparatus 101 or remote from the apparatus 101, and may accessible via a network. The store 103 may be representative of multiple stores which may be remote or local or a combination of both and the virtual space content may be sourced from the same or different stores 103. The output signalling generated by such operations of the processor is provided onwards to further components, such as to a virtual, augmented or mixed reality presentation device 104 associated with the user (not shown in figure 1).

The memory 101B (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example, the respective processors and memories are electrically connected to one another internally to allow for electrical communication between the respective components. In this example, the components are all located proximate to one another so as to be formed together as an ASIC, in other words, so as to be integrated together as a single chip/circuit that can be installed into an electronic device. In some examples one or more or all of the components may be located separately from one another.

The apparatus 101, in this example, forms part of a mobile telecommunication device 102 for providing for presentation of virtual space content via the presentation device 104. In this example, the processor 101A and memory 101B is shared by the mobile telecommunication device 102 and the apparatus 101, but in other examples, they may have their own processors and/or memory. In one or more other examples, the apparatus 101 may be separate from a mobile telecommunication device 102. In one or more examples, the apparatus 101 may form part of one of a VR apparatus and an AR apparatus. In one or more examples, the apparatus 100 may be part of a mixed reality apparatus. In one or more examples, the apparatus 101 may comprise a computer server in communication with the presentation device 104 and/or mobile telecommunication device 102 of the user.

The device 102 or the device 102 under the control of the apparatus 101 may provide for the presentation of a first virtual space and a second virtual space based on respective virtual space content from the store 103. The virtual space content in the examples that follow comprises spatial audio content comprising audio that is generated for presentation such that a user will perceive the audio as originating from a particular location or direction. However, the content may include visual imagery in addition to the spatial audio content.

The devices 102, 104 or the devices 102, 104 under the control of the apparatus 101 may provide for aural presentation of audio content associated with virtual space content using headphones or speakers which may be part of the presentation device 104.

The apparatus 101 may receive signalling indicative of the location and/or orientation of the user from the location tracker 105. The location tracker 105 may comprise a single device or a plurality of sub devices that each perform one or more of the following functions: determine the user's head orientation, determine the user's body orientation, determine the location of the user, presentation device 104 or device 102 in the real-world or in a vehicle. The user may have one or more tags or markers on their person, which the tracker 105 may use to determine one or more of their location, body/head orientation or any other positional/movement characteristic it is configured to determine. In other examples, the tracker may use analysis of captured sensor data, such as visual data from a camera, to identify and recognise the user and determine one or more of their location, body/head orientation or any other positional/movement characteristic it is configured to determine. It will be appreciated that such functionality may be provided by a plurality of independent apparatuses that are configured to report to the apparatus 101 or device 102 as required. The location tracker may provide information to enable the presentation of spatial audio that is perceived by the user as originating from a particular location in a vehicle or in the real-world despite changes in the user's head or body, as determined by the tracker 105.

Example figures 2A to 2C show examples of situations in which different virtual spaces may overlap and therefore there exists the potential for confusing presentation of spatial audio or obscured rendering of visual imagery that is provided as part of the overlapping virtual spaces. Furthermore, it may be difficult for a user to approach and/or interact with a specific audio object, comprising the perceived source of the audio, if said specific audio object is overlapping with at least one other interactive audio object from at least a second virtual space. The virtual spaces shown in the figures are shown as two-dimensional areas having a two-dimensional boundary, although it will be appreciated that the virtual spaces may comprise three-dimensional volumes and therefore the boundaries of these volumes may also be three-dimensional.

Example figure 2A shows a first, personal, virtual space 201 at a plurality of different times labelled T=0,1,2,3 and 4. The first virtual space is shown having a first boundary 203 within which spatial audio objects may be located. The first virtual space 201 is personal in that it moves with movement of the user. This may be because the first virtual space 201 is defined relative to the user's body or head or may be because the first virtual space is defined relative to a vehicle in which the user is located, such as a car cabin, boat cabin or train compartment.

In examples where the first virtual space 201 is defined relative to the user's head, the spatial audio presented in the first virtual space will be perceived from the same direction/location relative to the user's head irrespective of user head movement. Accordingly, the spatial audio may be heard, for example, "from the left of the user's head" or "from in front of the user's head" or "from a direction 30 degrees azimuth and 40 degrees elevation from the user's level straight-ahead direction". In examples where the first virtual space 201 is defined relative to the user's body, the spatial audio presented in the first virtual space will be perceived from the same direction/location relative to the user's body irrespective of user body movement. In examples where the first virtual space 201 is defined relative to a vehicle, the spatial audio presented in the first virtual space will be perceived from the same direction/location relative to the vehicle that therefore movement of the user's head results in a change in the presentation location for the audio so that the audio is perceived from the same location in the vehicle. In this case, movement of the vehicle does not change the direction from which the spatial audio is presented for the user as the first virtual space 201 is defined relative to a vehicle.

In one or more examples, the first virtual space 201 may be provided having at least two control modes. In a first control mode, the location of spatial audio objects may be defined relative to the user's head or body, as described above. In the second control mode, the location of the spatial audio objects may be defined relative to the real world and therefore the presentation of the locations of the spatial audio may be based on movement of the user's head or body enabling the user to move within the first virtual space. In other words, the first control mode may comprise a 3DoF presentation of the first virtual space 201 and the second control mode may comprise a 3DoF+ or even 6DoF presentation of the first virtual space 201. 3DoF+ refers to an extended single point of view location (e.g. 3DoF) rendering. The apparatus may provide for presentation of a motion parallax effect to provide a sense of depth. However, in one or more examples, the apparatus provides a view of the virtual space only for user locations that deviate from a default point of view location by up to a threshold amount. Thus the user is provided with some additional freedom of movement and the content provides a limited amount of motion parallax (enough to give the user a sense of natural depth by providing response to small translational movements of the user's head). Small translational movements of head can be defined, for example, as movements which can be achieved while the user is in a seated position without movement of the lower body. In this manner, this experience is comparable to a restricted 6DoF experience, where translational movements are limited to small head movements. The threshold amount, which defines how small the head movements may be, may depend on each use case or application, etc. The threshold amount may comprise a deviation and corresponding user input movement of the limit of a "seated position head movement" or it can be, for example, within 1-meter sphere, or something else.

Example figure 2A further shows a second virtual space 202 based on information from second virtual space content for presentation to the user. The second virtual space 202 has a presentation boundary 204 associated with the second virtual space content. In the example of figure 2A it is shown that the first virtual space 201 may overlap with the second virtual space 202 due to movement of the user through the second virtual space 202. In this example, overlap is present at times T=1, T=2 and T=3. At these times, spatial audio content, which forms part of the example virtual spaces 201, 202 may be required to be presented at the same time and the spatial audio object locations may, at least at times, be co-located, which may be confusing or unclear to the user and may reduce the user's ability to interact with the audio.

It will be appreciated that in other examples, the user may happen to be stationary and the second virtual space 202 may move through the first virtual space 201 to provide the aforementioned overlap.

Figure 2B shows a second example instance in which overlap between the area or volume of virtual spaces may occur. In figure 2B, a plan view of a first shop 210 and a second shop 211 is shown. The first shop 210 may have virtual space content associated therewith which defines a first-shop virtual space 212 that has a presentation boundary 213 that extends throughout the interior of the shop 210 and partly outside. The second shop 211 may have virtual space content associated therewith which defines a second-shop virtual space 214 that has a presentation boundary 215 that extends throughout the interior of the shop 211 and partly outside. The street outside the shops 210, 211 may have virtual space content associated therewith defining a street virtual space 216 having a presentation boundary 217. The user (not shown) may have a personal virtual space 218 that is associated with their location. The virtual spaces 212, 214, 216 and 218 are shown having spatial audio objects comprising circles 219 therein (only one labelled in figure 2B for clarity). As the user walks along, they may enter the presentation boundaries 213, 215, 217 and trigger the presentation of the associated virtual space content. Accordingly, the apparatus 101 may be required to provide for presentation of a plurality of virtual space content at the same time, which may lead to unclear presentation.

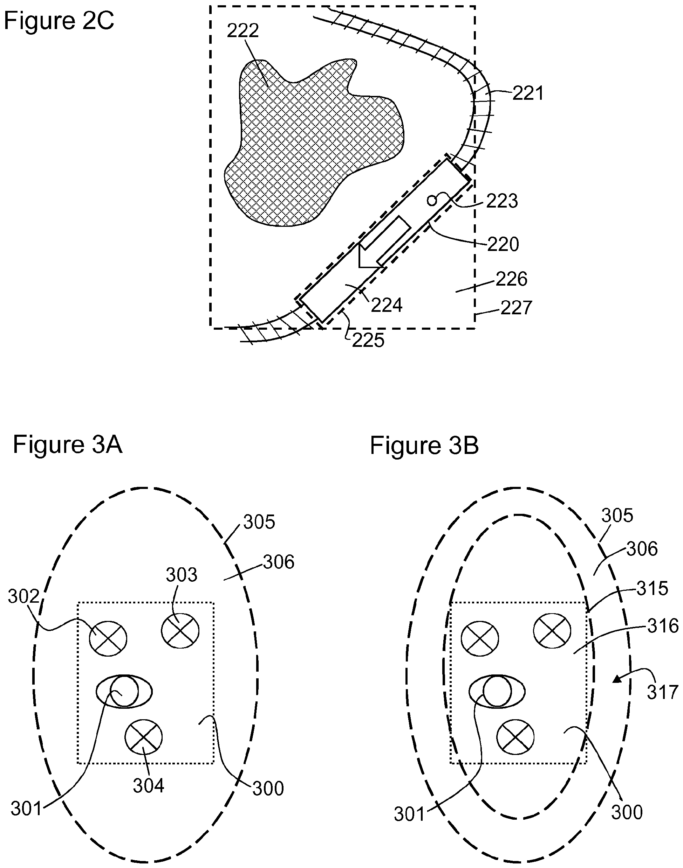

Figure 2C shows a train 220 travelling along a track 221 past a lake 222. A user 223, for which the presentation of the virtual spaces is intended, is present in the train. In this example, a first, personal virtual space 224 is shown which has a location defined relative to the train 220 and the first boundary 225 of the space 224 is shown around the perimeter of the train carriage. Accordingly, the first virtual space 224 moves with the user 223 and/or train 220. In this example, the first virtual space is "personal" because it is a virtual space that moves with the user, even if the first virtual space is associated with the train and therefore may be presented to other users on the train. The first virtual space 224 may provide information about the train journey. A second virtual space 226 having a presentation boundary 227 is associated with the lake 222 and may provide information about the lake (such as local services or nature trivia). Thus, as the train 220 travels along the track, the first virtual space associated with the user 224 overlaps with the second virtual space 226. Accordingly, the apparatus 101 may be required to provide for presentation of a plurality of virtual space content at the same time, which may lead to unclear presentation.

In one or more examples, the apparatus 101 may be configured to receive the following information;
i) information indicative that a first virtual space is being presented for a user, the first virtual space defined relative to the user or that moves with the user, such as defined relative to a vehicle in which the user is travelling;
ii) personal-virtual-space-boundary information, which may be predetermined or calculated by the apparatus 101;
iii) information indicative that second virtual space content is available for presentation or being presented to the user, which may be based on the determined location of the user and presentation boundary information of said virtual space content;
iv) an indication that the default second-audio-object location of a spatial audio object associated with the second virtual space content is within a first area defined by the personal-virtual-space-boundary information.

With this information the apparatus 101 may provide for modification of the virtual space content or the presentation of the virtual space content. In particular, the apparatus 101 may provide for modification of the location or locations from which spatial audio content will be perceived to avoid confusing presentation of audio or visual imagery.

With reference to example figure 3A, the first, personal, virtual space 300 presented for a user 301 is, in one or more examples, defined relative to one of the user 301 and a vehicle (not shown in figure 3A but shown in example figure 2C) in which the user 223 is located, such as defined relative to the user's head, user's body or train carriage, as exemplified above. The first virtual space 300 comprises one or more first audio objects 302, 303, 304 each having a respective location in the first virtual space 300. The location may be a stationary location relative to the first virtual space or may be a moving location such that the first audio object follows a predetermined path. In one or more examples, the moving location may be defined as a function of a measured quantity, such as the location of the user or other objects or landmarks. The one or more first audio objects 302, 303, 304 have respective audio content associated therewith. The audio content is for presentation as spatial audio such that it will be perceived by the user 301 to originate from the respective location of said first audio objects 302, 303, 304. Accordingly, in this example, the first virtual space 300 can be considered to be carried around with the user 301. The first virtual space 300 may comprise the user's virtual office and the audio objects may represent the audio from a work colleague transmitted from the work colleague to the user for presentation as spatial audio from one of the first audio object locations, or an audio news feed, or vocally-synthesised incoming emails.

The information indicative that the first, personal, virtual space 300 is being presented for a user may be received from a virtual space presentation device, wherein such functionality may be provided by the device 102. In one or more other examples, the apparatus 101 provides for presentation of the virtual space 300 and therefore said information is derived from the actions of the apparatus 101 in presenting the first virtual space 300.

The personal-virtual-space-boundary information may define at least a first boundary 305 of a first area 306 around a current location of the user 301. It will be appreciated that the first area 306 may comprise a three-dimensional volume. The one or more first audio objects 302, 303, 304 are, in this and one or more examples, located within the first boundary 305. The first boundary 305 may be considered to be a virtual wall used to determine how close particular audio objects from other virtual spaces may get to the user 301.

The shape of the area or volume given by the at least first boundary 305 may be defined, in one or more embodiments, at least partially by the user, an application used by the user to present the virtual space and/or spatial audio, a manufacturer of a vehicle to which the virtual space content relates, a constellation and/or type of the audio objects within the virtual space, or any other relevant feature or input. In one or more examples, it is understood that the movement of the user 301, or the virtual space 300, may affect the shape of the area or volume associated with the at least first boundary 305 as exemplified in figures 3-5. In some embodiments, the shape of the first boundary 305 may remain constant.

It is furthermore understood that the at least first boundary 305 need not wholly encircle or include the first virtual space 300. In some embodiments, it may be beneficial for the first boundary 305 to at least partially overlap with the boundary of the first virtual space and thus allow at least one of the audio objects 302, 303, 304 of the first virtual space 300 to lie outside the first boundary 305. Typical cases where the first boundary 305 will include the first virtual space 300 without overlap are such where the first virtual space is relatively small (such as the cabin of a car) and may contain only a small number of first audio objects.

Example figure 3B is substantially similar to figure 3A except that figure 3B shows the personal-virtual-space-boundary information defining a second boundary 315 of a second area 316 around the current location of the user 301. The second boundary 315 is, at least in part, inward of the first boundary 305 relative to the user 301. The first boundary 305 and the second boundary 315 define a buffer-area (or in three dimensions, a buffer-volume) 317 therebetween, which will be described in more detail in later embodiments.

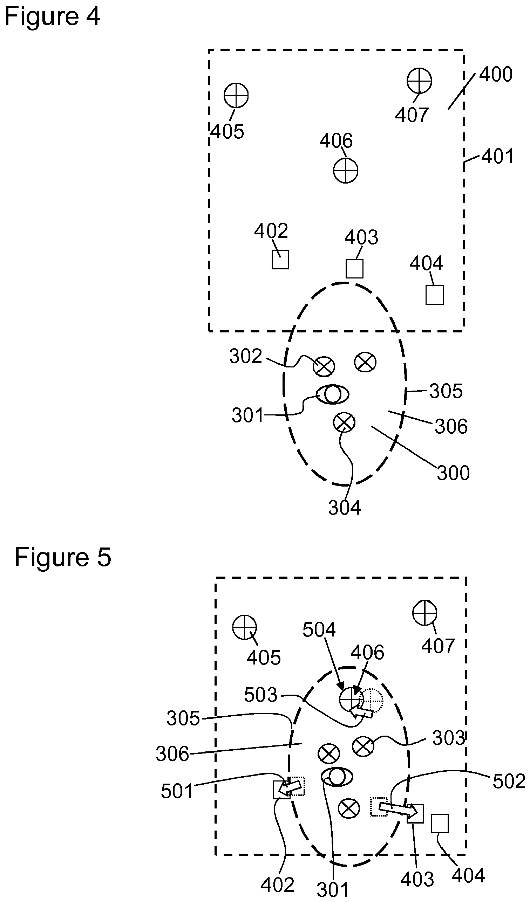

The information indicative that second virtual space content is available for presentation or being presented to the user may be received from a virtual space presentation device, wherein such functionality may be provided by the device 102. In one or more other examples, the apparatus 101 provides for presentation of the second virtual space 400 (shown in figures 4 and 5) and therefore said information may be derived from the actions of the apparatus 101 in presenting the second virtual space 400. Virtual spaces may be associated with different buildings, such as shops, museums, tourist areas, or open spaces and may have audio objects defined therein. Accordingly, virtual space content may have metadata associated therewith defining the real-world location with which it is associated. The apparatus 101 may be configured, based on the user's location and the aforementioned metadata, identify second virtual space content that is available for presentation the user 301 and may provide for its presentation.

In one or more examples, the presentation of the second virtual space 400 to the user 301 is dependent on a real-world, current location of the user 301 being within a presentation boundary 401 associated with the second virtual space content (shown in figure 4).

With reference to figure 4, in one or more examples, the second virtual space content comprises information, such as visual imagery content, audio content, the arrangement of said content in a virtual space etc, for the provision of the second virtual space 400 for presentation to the user 301. In the example of figure 4, the second virtual space 400 comprises three second audio objects 402, 403, 404 each having a location in the second virtual space 400 comprising, by default, a default second-audio-object location in the second virtual space 400. The second audio objects 402, 403, 404 have audio content associated therewith wherein the audio content associated with the second audio object is for presentation as spatial audio such that it will be perceived to originate from the respective location of said second audio object 402, 403, 404. The second virtual space content may be associated with a real-world location and, by way of said association, the second audio objects may be considered to have real-world locations.

The indication that the default second-audio-object location of the second audio objects 402, 403, 404 is within the first area 306 defined by the first boundary 305 (shown in figure 5) may be received from a virtual space presentation device, wherein such functionality may be provided by the device 102. In one or more other examples, the apparatus 101 provides for determination of whether or not the default location of one or more of the second audio objects 402, 403, 404 is within the first area 306 based on the location of the user 301 from tracker 105 for example, the personal-virtual-space-boundary information and the second virtual space content. Therefore, in one or more examples, said indication that the default second-audio-object location of the second audio objects 402, 403, 404 is within the first area 306 may be determined by the apparatus 101 or the apparatus 101 may be informed of the fact by a different apparatus.

Figure 5 shows the same arrangement as figure 4 except that there has been relative movement between the user 301 (and also the first virtual space 300) and the second virtual space 400 such that the default location of the second audio objects 402 and 403 are within the first area 306. The same reference numerals have been used for like parts.

With reference to example figure 5, the apparatus 101, based on the above-mentioned information, is configured to provide for movement 501, 502 of the two second audio objects 402, 403 in the second virtual space 400 from their default second-audio-object location (shown by dashed line squares) to a shifted location (shown by solid line squares) outside the first area 306 defined by the personal-virtual-space-boundary information such that the audio content associated with the two second audio objects 402, 403 will be presented as spatial audio such that the audio content will be perceived to originate from the shifted location (shown by dashed line squares).

The third of the three first audio objects 404 is not within the first area 306 and therefore the apparatus 101 is configured not to provide for movement of its location from its default second-audio-object location. In one or more examples, the apparatus 101 may provide for presentation, as spatial audio, of the audio content of the first and second of the three second audio objects 402, 403 from their shifted locations and the presentation of the audio content of the third of the three second audio objects 404 from its default second-audio-object location. In one or other more examples, the apparatus 101 may generate or provide instructions for the generation of spatial audio that can then be played to the user 301 based on the shifted/default locations as appropriate. In one or more examples, the apparatus 101 may provide for presentation, as spatial audio, of the audio content of the first audio objects 302, 303, 304.

Accordingly, the apparatus 101 may provide for aural separation of the second audio objects 402, 403 from the first audio objects 302, 303, 304, by virtue of shifting the location from which the second audio objects 402, 403 will be perceived to a location spaced from the user 301. In one or more examples, all of the first spatial audio objects 302, 303, 304 are within the first boundary 305. Thus, as the audio content is presented as spatial audio, the user 301 will be provided with an aural separation of audio content based on the perceived location from which the audio objects will be heard.

In this and one or more examples, the shifted location is located at the first boundary 305 defined by the personal-virtual-space-boundary information. However, it will be appreciated that the apparatus 101 may be configured to modify the location of the spatial audio objects 402, 403 to a shifted location within a predetermined distance of the first boundary 305 rather than to a location on the first boundary 305.

The apparatus 101, in one or more examples, may be configured to minimise (at least approximately) the movement of the second audio objects 402, 403 in the second virtual space 400 from their default second-audio-object locations to their shifted locations. Thus, the shifted location may further comprise a location that is currently closest, within a threshold distance, to the default second-audio-object locations based on a determined position of the user 301 to determine the location of the first boundary 305 and the default second-audio-object locations.

In one or more examples, the second virtual space content may define second audio objects of different types. The second audio objects 402, 403, 404 may be considered to be first-type second audio objects 402, 403, 404.

With reference to example figure 4, the second audio objects, defined by the second virtual space content, may include at least one second-type second audio object having a location in the second audio space comprising, by default, a default second-type-second-audio-object location. In the present example, three second-type second audio objects 405, 406, 407 are shown. The second-type second audio objects 405, 406, 407 may comprise interactive audio objects. Thus, it may be required that the user 301 can approach the perceived location of the audio objects to perform some form of user-interaction.

As with the other audio objects 402, 402, 404, the second-type second audio objects 405, 406, 407 have audio content associated therewith wherein the audio content associated with the second-type second audio object 405, 406, 407 is provided for presentation as spatial audio such that it is perceived to originate from the location of the said second-type second audio object.

The apparatus 101 may be configured to treat the second-type second audio objects differently. Thus, the apparatus 101 may be configured, based on an indication that the default second-type-second-audio-object 406 location, for example, is within the first area 306 defined by the personal-virtual-space-boundary information, to provide for presentation of the audio content of the second-type second audio object 406 as spatial audio from a location within the first area 306 defined by the personal-virtual-space-boundary information.

Thus, the apparatus 101 may be configured to provide for movement to a location outside the first area 306 of the first-type audio objects 402, 403 but not the second-type second audio objects 406. In one or more examples, by default, the apparatus 101 may be configured to provide for presentation of the audio content of the second-type second audio object 406 as spatial audio from the default second-type-second-audio-object 406 location.

Nevertheless, the apparatus 101 may be configured to provide for movement of the location of the second-type second audio objects 406 in certain circumstances. For example, it may not be desirable for the default location of the second-type-second-audio-object 406 to lie along a line extending from the user 301 towards any one of the first audio objects 302, 303, 304. Thus, if the audio content is perceived from the same direction (or within an angular threshold of the same direction) then there may be perceptual masking of the audio content of the "colinear" first audio object and the second-type second audio object.

Thus, in one or more examples, the location of the second-type second audio object 406 may be moved 503 to a non-overlapping location 504 that is not colinear with the location of the user 301 and any one of the first audio objects 302, 303, 304. As shown in figure 5, the default location of second audio object 406 would be colinear with first audio object 303 and user 301 but the apparatus has provided for movement of the second audio object 406 to the non-overlapping location 504. The non-overlapping location need not be outside the first area 306 as provided for in relation to the first-type second audio objects 402, 402. Thus, the non-overlapping location may be determined independently of the first boundary 305 or first area 306 defined by the personal-virtual-space-boundary information.

In some embodiments, the location modification associated with avoiding a colinear location between audio objects of the first and second virtual space may alternatively be performed for audio objects of the first virtual space. Referring to the example of figure 5, in some embodiments the apparatus may provide for the first audio object 303 to be moved instead of the second audio object 406. The preferred option may depend on the use case of the application, and in some embodiments the choice may be dependent on the extent of the required audio object location modification and/or the number of associated operations. In one or more examples, a movement of both the audio objects 303 and 406 may be provided based on there being or potentially being a colinear arrangement.

To summarise the apparatus 101 may receive information indicative of or may calculate when the following are spatially overlapping from a point of view of the user 301 within a predetermined angular threshold:
(i) at least one of said one or more locations from which the audio content of the first audio objects 302, 303, 304 is presented as spatial audio, relative to the location of the user 301; and
(ii) the default second-type-second-audio-object location 406, relative to the user 301.

If so, the apparatus 101 may provide for moving of the location of the second-type second audio object to the non-overlapping location for all overlapping second-type second audio objects 405, 406, 407 or only those having a default second-type-second-audio-object location that is currently within the first area 306. If not, the location of the second-type second audio object remains as the default second-type-second-audio-object location.

The non-overlapping location may be selected as a location closest or within a threshold distance of the default second-type-second-audio-object location while not being colinear with the location of the user 301 and any one of the first audio objects 302, 303, 304 within the predetermined angular threshold. The predetermined angular threshold may be 1, 2, 3, 4, 5 or more degrees.

It will be appreciated that as the user 301 moves through the second virtual space 400, the shifted location of the first-type second audio objects 402, 403, 404 may be continually or periodically moved provided their default second audio object locations fall within the first area 306. Once each of the default second audio object locations no longer fall within the first area 306, the apparatus may provide for movement of the respective second audio objects 402, 403, 404 in the second virtual space from their shifted location and/or non-overlapping back to their default (second-type)-second-audio-object location. Accordingly, the audio content associated with the second audio object will be presented as spatial audio to be perceived to originate from the default second-audio-object location.

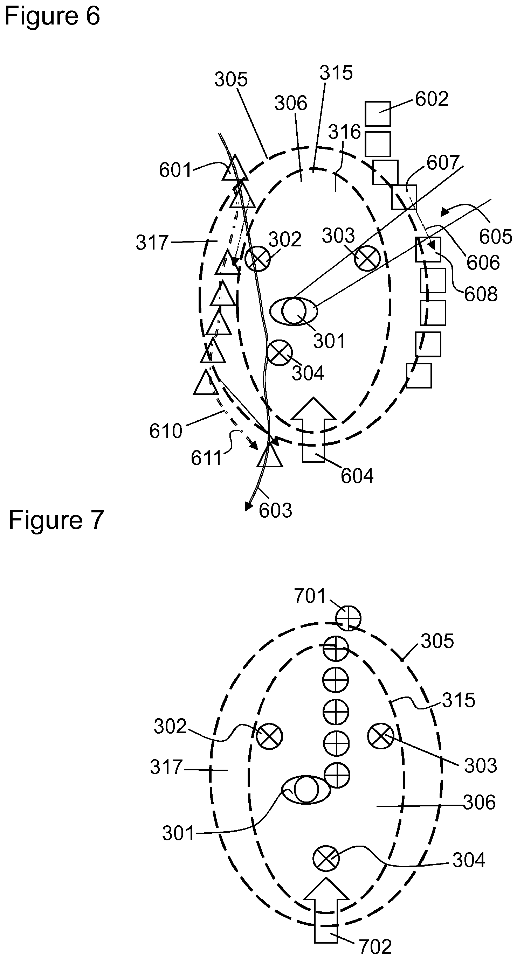

Figures 6 and 7 are similar to figures 4 and 5 and show how different types of spatial audio object are moved during relative movement between the first audio objects 302, 303, 304 of the first virtual space 300 and the second virtual space 400. In figures 6 and 7, only the second audio objects 601, 602, 701 of the second virtual space are shown at different consecutive times during said relative movement. The same reference numerals have been used where appropriate.

With reference to figures 6 and 7, the second audio objects, defined in the second virtual space content, may include at least one third-type second audio object 601 illustrated at various times as the user 301 and audio object 601 move relative to one another by the location of the triangle symbols. Figure 6 also shows a first-type second audio object 602 illustrated at various times by the location of the square symbols. Figure 7 illustrates the second-type second audio object 701 at various times as the user 301 and audio object 701 move relative to one another by the location of the "circle with plus symbol" symbols. As before, the user 301 may be moving through the second virtual space while "carrying" their first virtual space or "being carried by" a moving first virtual space, which comprises the first audio objects 302, 303, 304.

The third-type second audio object 601 may, in one or more examples, be categorised as such because it is defined in the second virtual space content as having a moving location that follows a predetermined path 603 in the second audio space that, for example, is not dependent on the user position or user-input, and wherein the audio content associated with the third-type second audio object is provided for presentation as spatial audio such that it is perceived to originate from its current location along the predetermined path 603. In other examples, the third-type second audio object may have a stationary location in the second virtual space content.

Considering the example first-type second audio object 602, it is shown that as the user 301 moves forward, shown by arrow 604 that the first-type second audio object 602 is moved, by the apparatus 101, to a shifted location that follows the first boundary 305.

In one or more examples, it may not be desirable for the shifted location to lie along a line, shown as sector 605, extending from the user 301 towards any one of the first audio objects 302, 303, 304. Thus, despite the second audio objects 601 potentially being moved to a shifted location more distant from the user 301 than the first audio object 303, if the audio content is perceived from the same direction (or within an angular threshold of the same direction) then there may be perceptual masking of the audio content of the "colinear" first and second audio objects, 303, 602 from the determined user location at 301.

Thus, in one or more examples, the shifted location is further defined as being non-overlapping and angularly spaced from the locations of the first audio object 303, from a point of view of the user 301, based on information indicative of the relative locations from which the user will perceive the audio content of the first audio objects 301, 302, 303 provided for presentation to them. Accordingly, arrow 606 shows that the shifted location of the first-type second audio object 602 was moved from location 607 to location 608 to avoid overlapping of the first audio object 303 and the second audio object 602.

Turning to the third-type second audio object 601, it may be considered undesirable for a third-type second audio object 601 that may be on a path towards the user 301 to suddenly and abruptly deviate from its path towards the user, which may comprise, for moving third-type second audio objects a deviation from the previously predetermined path 603, at the first boundary 305 and change direction to move along the first boundary 305 similar to the first-type second audio object 602. This may lead to an undesirable and confusing spatial audio presentation of the audio content associated with the third-type second audio object 601. This may also appear jittery and abnormal in case of a visual content that may also be provided for presentation from the same location.

Thus, in one or more examples, the buffer-area 317 between the first boundary 305 and the second boundary 315 may be used to gradually change the trajectory and/or velocity of the third-type second audio object 601. Accordingly, the apparatus 101 may be configured to determine that the third-type second audio object 601, following its path or predetermined path 603, has transitioned across the first boundary 305. The apparatus 101 may then be configured to provide for at least two incremental changes to the trajectory and/or velocity of the third-type second audio object 601 such that it does not enter the second area 316 and is "deflected" to follow a path outward of the first boundary 305 at least while the "default" location of the third-type second audio object 601, such as along its predetermined path 603 lies inward of the first boundary 305. The "default" location may be considered to be the location as defined in the second virtual space content along the predetermined path 306 at the current time.

Thus, in the above-mentioned example, the buffer-area 307 is used to gradually change the trajectory and/or velocity of the third-type second audio object 601 when the third-type second audio object is a moving object or non-moving object. In one or more examples, the same gradual change may be applied to third-type second audio object 601 based on the closing speed or velocity between the third-type second audio objects 601 and the user 301 being above a closing-threshold.

Thus, to summarise the movement of the location of the third-type second audio object 601, the second virtual space content, in one or more examples, defines at least one third-type second audio object 601 having a location in the second audio space comprising, by default, a default third-type-second-audio-object location in the second virtual space. As mentioned above, in one or more examples, the at least one third-type second audio object 601 may comprise a moving-type second audio object having a moving location that follows the predetermined path 603 in the second virtual space, and wherein the audio content associated with the third-type second audio object 601 is provided for presentation as spatial audio such that it is perceived to originate from its current location along the predetermined path 603. The default third-type-second-audio-object location may comprise, in the case of a third-type second audio object 601, the location along the predetermined path at the current time given the definition of the moving location in the second virtual space content.

The apparatus 101 may, based on an indication that a current location of the third-type-second-audio-object is within the buffer-area 317 and that there is relative movement between the third-type-second-audio-object 601 and the user 301, be configured to provide for two or more changes to one of a trajectory and a velocity (shown as dashed arrow 610) of the third-type second audio object such that the location of the at least one third-type second audio object is directed away from its default third-type-second-audio-object location (along path 603, for example) and directed outward of the buffer-area 307 prior to crossing the second boundary 315.

Figure 6 also shows an example of the movement, at 611, of the location of the third-type second audio object 601 to avoid an overlapping condition, as discussed above, with the first audio object 304. In one or more examples, the movement of third-type second audio objects 601 to non-overlapping locations may or may be provided by the apparatus 101.

In one or more examples, the second audio object 601 may pass by the user 301 too quickly for them to comprehend the audio content associated with that second audio object 601. For example, if the second audio object is a third-type second audio object 601, the speed of its defined movement may be above a certain threshold set for the understanding of the audio content. As a further example, the second audio object 601 may be stationary and the user 301 may be passing by the second audio object 601 at a speed above a threshold such that the user would have difficulty comprehending the audio content given it would only be rendered from a location near to the user 301 for an all too brief time. In a still further example, the relative movement of a third-type second audio object 601 combined with the speed of the user 301 may result in a combined relative speed above a threshold such that the user would have difficulty comprehending the audio content.

If the second audio object 601 is determined to pass by the user 301 too quickly, the apparatus 101 may be configured to slow the movement of second audio objects 601 in the buffer-area 317, or objects inward of the first boundary 305 or inward of the second boundary 306 to retain them therein for a finite period of time.

The threshold, termed a slowing-threshold speed, may comprise a predetermined fixed value or may be based on various parameters, such as a time the second audio object 601 is within a predetermined distance of the user 301 or a time based on the aforementioned relative speed and a duration of the audio content associated with the second audio object 601.

Thus, in one or more examples, based on an indication that the current location of the third-type second audio object is within the buffer-area and that there is relative movement, such as above a threshold speed or velocity, between the user 301 and the current location of the third-type second audio object 601; the apparatus 101 may be configured to provide for slowing of the relative movement between the between the user 301 and the current location of the third-type second audio object 601 by providing for modification of the movement of the location of the third-type second audio object 601, at least while the location of the third-type second audio object 601 is within the buffer-area 317.

The apparatus 101 may be configured to slow the relative movement to a slowed-movement speed, which may be a function of one or more of:
i) the speed of the relative movement between the user and the current location of the third-type second audio object; and
ii) a duration of the audio content associated with the third-type second audio object.

As a practical example of the slowing of the movement of the second audio object we may consider a user on a train, who may have their own first virtual space and first boundary. A train station through which the train is travelling may be associated with second virtual space content, which may include a second audio object that has audio associated with it that explains train timetable changes. If the train were to pass through the station without stopping, the user may experience the second audio object very briefly as the train passes through the station. However, by the action of the apparatus 101, the relative movement of the second audio object relative to the user may be slowed when it is in the buffer-area. Thus, despite the train have passed by, the second audio object may be retained and "pulled along" by the buffer-area so that the apparatus may provide for the presentation of the audio content of the second audio object over a longer period of time. The user may therefore be presented with the audio content of the second audio object for sufficient time to hear it for its total duration or for a time for it to be meaningful.

Figure 7 shows the second-type second audio object 701 at a plurality of times during relative movement 702 between the user 301 and the second-type second audio object 701. As described above, the apparatus 101 may be configured to allow for the second-type second audio object 701 to pass through the buffer area 317 and the first area 316 without being moved to a shifted location. The passage of the second-type second audio object 701 through the buffer area 317 and the first area 316 may be slowed, as explained above, to provide time for the user to interact with the second-type audio object 701.

In any of the above examples, the audio objects 302, 303, 304, 219, 402-407, 601, 602, 701 may have associated visual imagery for presentation to a user via a display, which may be part of presentation device 104. Accordingly, movement of the audio object may provide for movement of a location at which the associated visual imagery is displayed, which may provide for clearer display of the visual imagery.

While the movement of the location of second audio objects may improve the understanding for the user 301 and avoid perceptual masking of the spatial audio, in one or more examples, it may provide for improved quality of the rendering of the audio and/or reduce the processing burden for generation of the spatial audio based on the locations of the audio objects.

The apparatus 101 may be configured render the spatial audio associated with the audio objects of the first virtual space and the second virtual space for simultaneous presentation to the user. In other examples, the apparatus 101 may provide instructions to a spatial audio renderer to render the spatial audio at the relevant default, shifted or non-overlapping locations.

The personal-virtual-space-boundary information that defines at least the first boundary 305 around a current location of the user 301 may further define its shape. In one or more examples, metadata associated with the second virtual space content may influence the size and/or shape of the first boundary defined in the personal-virtual-space-boundary information. Thus, the personal-virtual-space-boundary information may define the first boundary in terms of a property provided in second virtual space content that may be encountered by the user 301. Accordingly, second virtual space content that should be experienced close to the user can be provided with metadata that provides for a smaller first boundary 305.

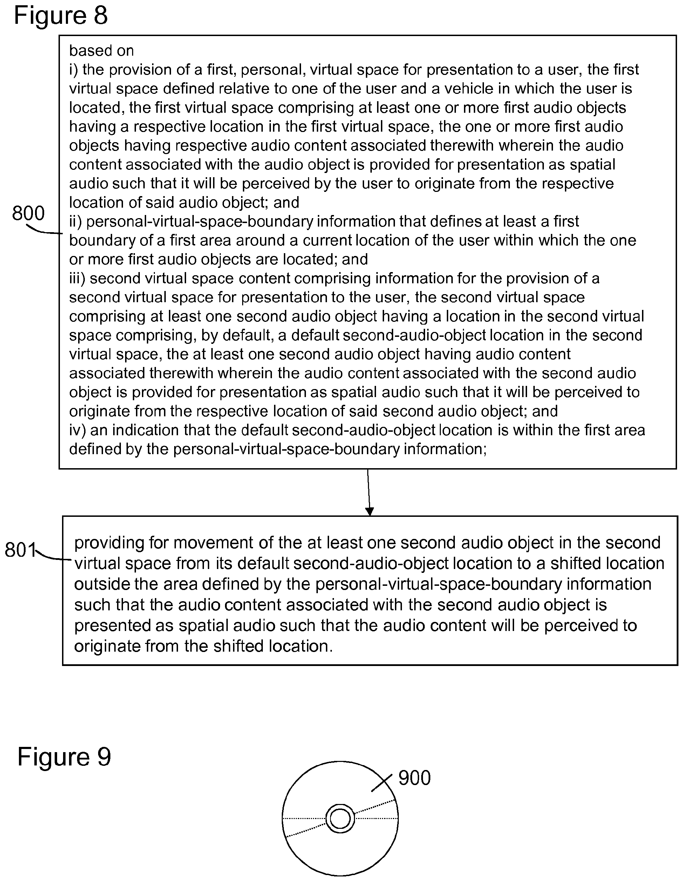

Figure 8 shows a flow diagram illustrating the steps of, based on 800:
i) the provision of a first virtual space for presentation to a user, the first virtual space defined relative to one of the user and a vehicle in which the user is located, the first virtual space comprising at least one or more first audio objects having a respective location in the first virtual space, the one or more first audio objects having respective audio content associated therewith wherein the audio content associated with the audio object is provided for presentation as spatial audio such that it will be perceived by the user to originate from the respective location of said audio object; and
ii) personal-virtual-space-boundary information that defines at least a first boundary of a first area around a current location of the user within which the one or more first audio objects are located; and
iii) second virtual space content comprising information for the provision of a second virtual space for presentation to the user, the second virtual space comprising at least one second audio object having a location in the second virtual space comprising, by default, a default second-audio-object location in the second virtual space, the at least one second audio object having audio content associated therewith wherein the audio content associated with the second audio object is provided for presentation as spatial audio such that it will be perceived to originate from the respective location of said second audio object; and
iv) an indication that the default second-audio-object location is within the first area defined by the personal-virtual-space-boundary information;
providing 801 for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.

Figure 9 illustrates schematically a computer/processor readable medium 900 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs, such as to select second audio objects or modify the location of first and/or second audio objects, may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a smart TV, a server, a wearable apparatus, a virtual reality apparatus, a server or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus, the apparatus comprising means configured to;
based on:
i) the provision of a first virtual space for presentation to a user, the first virtual space defined relative to one of the user and a vehicle in which the user is located, the first virtual space comprising one or more first audio objects having a respective location in the first virtual space, the one or more first audio objects having respective audio content associated therewith wherein the audio content associated with the audio object is provided for presentation as spatial audio such that it will be perceived by the user to originate from the respective location of said audio object; and
ii) personal-virtual-space-boundary information that defines at least a first boundary of a first area around a current location of the user; and
iii) second virtual space content comprising information for the provision of a second virtual space for presentation to the user, the second virtual space comprising at least one second audio object having a location in the second virtual space comprising, by default, a default second-audio-object location in the second virtual space, the at least one second audio object having audio content associated therewith wherein the audio content associated with the second audio object is provided for presentation as spatial audio such that it will be perceived to originate from the respective location of said second audio object; and
iv) an indication that the default second-audio-object location is within the first area defined by the personal-virtual-space-boundary information;
provide for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.

2. The apparatus of claim 1, wherein the shifted location is located at one of:
a) the first boundary defined by the personal-virtual-space-boundary information;
b) within a predetermined distance of the first boundary defined by the personal-virtual-space-boundary information.

3. The apparatus of claim 1 or claim 2, wherein the shifted location is further defined as being non-overlapping and angularly spaced from the locations of the one or more first audio objects, from a point of view of the user, based on information indicative of the relative locations from which the user will perceive the audio content of the first audio objects provided for presentation to the user.

4. The apparatus of any preceding claim, wherein the shifted location is further defined as comprising a location that is currently closest to the default second-audio-object location, within a threshold distance, based on a determined position of the user and the default second-audio-object location.

5. The apparatus of any preceding claim, wherein the second virtual space content defines at least one second-type second audio object having a location in the second audio space comprising, by default, a default second-type-second-audio-object location, the at least one second-type second audio object having audio content associated therewith wherein the audio content associated with the second-type second audio object is provided for presentation as spatial audio such that it is perceived to originate from the location of the said second-type second audio object, wherein based on an indication that the default second-type-second-audio-object location is within the first area defined by the personal-virtual-space-boundary information, provide for presentation of the audio content of the second-type second audio object as spatial audio from a location within the first area defined by the personal-virtual-space-boundary information.

6. The apparatus of claim 5, wherein based on a determination that:
(i) at least one of said one or more locations from which the audio content of the first audio objects is presented as spatial audio, relative to the user; and
(ii) the default second-type-second-audio-object location, relative to the user;
are overlapping from a point of view of the user within a predetermined angular threshold;
provide for moving of the location of the second-type second audio object to a non-overlapping location determined independently of the first boundary defined by the personal-virtual-space-boundary information.

7. The apparatus of any preceding claim wherein the location of and the orientation of the first virtual space is defined relative to one of a head or body of the user, such that presentation of the audio content as spatial audio from the locations of the one or more first audio objects is independent of user-movement of said one of the head or body of the user.

8. The apparatus of any preceding claim, wherein based on an indication that the default second-audio-object location is no longer within the first area defined by the personal-virtual-space-boundary information;
provide for movement of the at least one second audio object in the second virtual space from its shifted location back to its default second-audio-object location such that the audio content associated with the second audio object is presented as spatial audio to be perceived to originate from the default second-audio-object location.

9. The apparatus of any preceding claim, wherein
(i) the personal-virtual-space-boundary information also defines a second boundary of a second area around the current location of the user, the second boundary, at least in part, inward of the first boundary relative to the user and wherein the first boundary and the second boundary define a buffer-area therebetween;
(ii) the second virtual space content defines at least one third-type second audio object having a location in the second audio space comprising, by default, a default third-type-second-audio-object location in the second virtual space, the at least one third-type second audio object having audio content associated therewith wherein the audio content associated with the third-type second audio object is provided for presentation as spatial audio such that it is perceived to originate from its location; wherein
based on an indication that a current location of the third-type-second-audio-object is within the buffer-area and that there is relative movement between the third-type-second-audio-object and the user, the apparatus has means configured to provide for one or more changes to one of a trajectory and a velocity of the third-type second audio object such that the location of the at least one third-type second audio object is directed away from its default third-type-second-audio-object location and directed outward of the buffer-area prior to crossing the second boundary.

10. The apparatus of any preceding claim, wherein
(i) the personal-virtual-space-boundary information also defines a second boundary of a second area around the current location of the user, the second boundary, at least in part, inward of the first boundary relative to the user and wherein the first boundary and the second boundary define a buffer-area therebetween;
(ii) the second virtual space content defines at least one third-type second audio object having a location in the second audio space, the at least one third-type second audio object having audio content associated therewith wherein the audio content associated with the third-type second audio object is provided for presentation as spatial audio such that it is perceived to originate from its location; wherein
based on an indication that the current location of the third-type second audio object is within the buffer-area and that there is relative movement between the user and the current location of the third-type second audio object;
provide for slowing of the relative movement between the between the user and the current location of the third-type second audio object by providing for modification of the movement of the location of the third-type second audio object.

11. The apparatus of claim 10 wherein the apparatus is configured to provide for said slowing of the relative movement based on the speed of the relative movement being above a slowing-threshold speed.

12. The apparatus of claim 10, wherein the apparatus is configured to provide for said slowing of the relative movement as a function of one or more of:
i) the speed of the relative movement between the user and the current location of the third-type second audio object; and
ii) a duration of the audio content associated with the third-type second audio object.

13. A method, the method comprising:
based on:
i) the provision of a first virtual space for presentation to a user, the first virtual space defined relative to one of the user and a vehicle in which the user is located, the first virtual space comprising at least one or more first audio objects having a respective location in the first virtual space, the one or more first audio objects having respective audio content associated therewith wherein the audio content associated with the audio object is provided for presentation as spatial audio such that it will be perceived by the user to originate from the respective location of said audio object; and
ii) personal-virtual-space-boundary information that defines at least a first boundary of a first area around a current location of the user within which the one or more first audio objects are located; and
iii) second virtual space content comprising information for the provision of a second virtual space for presentation to the user, the second virtual space comprising at least one second audio object having a location in the second virtual space comprising, by default, a default second-audio-object location in the second virtual space, the at least one second audio object having audio content associated therewith wherein the audio content associated with the second audio object is provided for presentation as spatial audio such that it will be perceived to originate from the respective location of said second audio object; and
iv) an indication that the default second-audio-object location is within the first area defined by the personal-virtual-space-boundary information;
providing for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.

14. The method of claim 13, wherein the shifted location is further defined as being non-overlapping and angularly spaced from the locations of the one or more first audio objects, from a point of view of the user, based on information indicative of the relative locations from which the user will perceive the audio content of the first audio objects provided for presentation to them.

15. A computer readable medium comprising computer program code stored thereon, the computer readable medium and computer program code being configured to, when run on at least one processor, perform the method of:
based on:
i) the provision of a first virtual space for presentation to a user, the first virtual space defined relative to one of the user and a vehicle in which the user is located, the first virtual space comprising at least one or more first audio objects having a respective location in the first virtual space, the one or more first audio objects having respective audio content associated therewith wherein the audio content associated with the audio object is provided for presentation as spatial audio such that it will be perceived by the user to originate from the respective location of said audio object; and
ii) personal-virtual-space-boundary information that defines at least a first boundary of a first area around a current location of the user within which the one or more first audio objects are located; and
iii) second virtual space content comprising information for the provision of a second virtual space for presentation to the user, the second virtual space comprising at least one second audio object having a location in the second virtual space comprising, by default, a default second-audio-object location in the second virtual space, the at least one second audio object having audio content associated therewith wherein the audio content associated with the second audio object is provided for presentation as spatial audio such that it will be perceived to originate from the respective location of said second audio object; and
iv) an indication that the default second-audio-object location is within the first area defined by the personal-virtual-space-boundary information;
providing for movement of the at least one second audio object in the second virtual space from its default second-audio-object location to a shifted location outside the area defined by the personal-virtual-space-boundary information such that the audio content associated with the second audio object is presented as spatial audio such that the audio content will be perceived to originate from the shifted location.
